(19)

Europäisches
Patentamt
European
Patent Office
Office européen
des brevets

(11) **EP 2 061 180 A1**

(12) **EUROPEAN PATENT APPLICATION**

(43) Date of publication:
 **20.05.2009 Bulletin 2009/21**

(51) Int Cl.:
 *H04L 12/14* [(2006.01)]   *H04M 15/00* [(2006.01)]

(21) Application number: **07120861.5**

(22) Date of filing: **16.11.2007**

(84) Designated Contracting States:
 **AT BE BG CH CY CZ DE DK EE ES FI FR GB GR HU IE IS IT LI LT LU LV MC MT NL PL PT RO SE SI SK TR**
 Designated Extension States:
 **AL BA HR MK RS**

(71) Applicant: **Nokia Siemens Networks Oy**
 **02610 Espoo (FI)**

(72) Inventors:
 • **Hellgren, Vesa**
  **00530, Helsinki (FI)**
 • **Melgosa, Jorge**
  **00180, Helsinki (FI)**

(74) Representative: **Smolander, Jouni Juhani**
 **Kolster OY AB**
 **Iso Roobertinkatu 23, PO Box 148**
 **00121 Helsinki (FI)**

(54) **Charging data transmission in communications system**

(57)   The present invention relates to a method for transmitting charging data. A charging data record is fragmented (300) into a plurality of charging data fragments for transmission, each charging data fragment comprising a portion of the charging data record. A fragmentation information element (64) is inserted (302; 308; 310) in each charging data fragment to indicate fragmentation. A fragmentation information element of a last charging data fragment comprising the last portion of the charging data record comprises a predefined identifier differing from identifiers of fragmentation information elements of other charging data fragments of the charging data record.

```
┌─────────────────────────────┐
│  Need to fragment charging  │
│  data record (CDR)/separate │ ⟵ 300
│      fragments of CDR       │
└──────────────┬──────────────┘
               ▼
┌─────────────────────────────┐
│  Include value indicative   │ ⟵ 302
│ of first fragment in 1st    │
│       fragment of CDR       │
└──────────────┬──────────────┘
               ▼
┌─────────────────────────────┐
│                             │ ⟵ 304
│   Select next fragment of   │◄──────────┐
│            CDR              │           │
└──────────────┬──────────────┘           │
               ▼    306                    │
          ◇─────────────◇                  │
         ╱               ╲    No  ┌─────────────────┐
        ◇  Last fragment   ◇──────│ Include value    │
         ╲   of CDR?      ╱        │ indicative of    │
          ◇─────────────◇         │ intermediate     │
               │ Yes              │   fragment       │
               ▼                  └─────────────────┘
┌─────────────────────────────┐        308
│ Include value indicative of │ ⟵ 310
│        last fragment        │
└─────────────────────────────┘
```

Fig. 3

## Description

### Field

The invention relates to charging data transmission in a communications system.

### Background

Charging refers to a function within a communications network whereby information related to a chargeable event is collected, formatted and transferred in order to make it possible to determine usage for which a charged party may be billed. Charging for use of communications services may be typically divided to online charging and offline charging. Online charging refers to a charging mechanism where charging information can affect, in real-time, the service rendered, and therefore a direct interaction of the charging mechanism with session/service control is required. Offline charging refers to a charging mechanism where charging information does not affect, in real-time, the service rendered.

A charging data record (CDR) is a collection of information about a chargeable event, for instance time of call set-up, duration of the call, or amount of data transferred, for use in billing and accounting. CDRs are typically transferred from a charging function responsible for collecting information of a chargeable event to a charging data record reception/ processing function. For instance, in Third Generation Partnership Project (3GPP) system CDRs are transferred over Ga interface from a Charging Data Function (CDF) of a core network element, such as a SGSN (Serving GPRS Support Node) or a GGSN (Gateway GPRS Support Node), to a charging gateway function CGF.

Transport Control Protocol (TCP) or User Data Protocol (UDP) may be used as an underlying transmission mechanism to transfer CDRs. In 3GPP a specific General Packet Radio System (GPRS) protocol for CDR transport, GTP', is used over TCP or UDP to transfer CDRs.

UDP can be used to deliver long CDRs, even over 60000 bytes, but in practice problems may occur. If a UDP datagram cannot be delivered in a single IP packet, then that UDP datagram is fragmented to multiple IP packets. Reassembly of fragmented UDP packets decreases the reliability of delivery considerably, because if one of the fragmented packets arrives too late or it is lost, then the whole UDP datagram is discarded. A typical limit to the UDP datagram length is just 8192 bytes, but fragmentation is typically required when the packet size exceeds 1500 bytes (Ethernet). Even if TCP is used for CDR delivery, delivery of very long CDRs over the TCP generates a reliability problem, because retransmission and failure recovery procedures are defined for the whole CDR in the 3GPP system. Thus, if the CGF fails when almost the whole CDR has been already delivered to the CGF, the CDF must deliver the whole CDR to another CGF. Fragmentation of CDRs is not defined in 3GPP specifications.

An information field may be used in a CDR message to indicate that the CDR continues, i.e. to indicate that the CDR message is a part of the CDR and that the next message contains the next part. However, errors may be caused to processing of a CDR if a transmission problem occurs during transport of the fragmented CDR, i.e. before all parts of the CDR have been received.

### Brief description

A method, a system, apparatuses, and computer program products are now provided, which are characterized by what is stated in the independent claims. Some embodiments of the invention are described in the dependent claims.

According to an aspect of the invention, a fragmentation information element is inserted to each charging data fragment of a charging data record to indicate fragmentation. A fragmentation information element of a last charging data fragment comprising the last portion of the charging data record comprises a predefined identifier differing from identifiers of fragmentation information elements of other charging data fragments of the charging data record.

The invention and various embodiments of the invention provide several advantages, which will become apparent from the detailed description below. One advantage is that it is now possible to identify last parts of CDRs and detect end of a CDR. Hence, it is possible to avoid or at least reduce errors caused by faults during reception of the last fragment.

### List of drawings

Embodiments of the present invention are described below, by way of example only, with reference to the accompanying drawings, in which

   Figure 1 illustrates a charging data collection system;
   Figure 2 illustrates an apparatus according to an embodiment;
   Figure 3 illustrates a method according to an embodiment;

Figure 4 illustrates a method according to an embodiment;
Figure 5 illustrates a method according to an embodiment; and
Figure 6 illustrates a charging data record fragment according to an embodiment.

## Description of embodiments

The following embodiments are exemplary. Although the specification may refer to "an", "one", or "some" embodiment(s) in several locations, this does not necessarily mean that each such reference is to the same embodiment (s), or that the feature only applies to a single embodiment. Single features of different embodiments may also be combined to provide other embodiments.

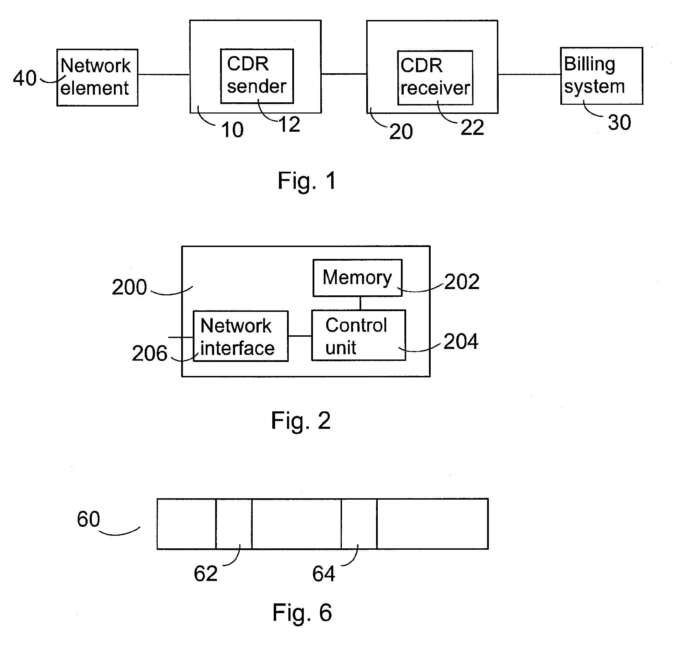

Figure 1 illustrates a charging data collection system according to an embodiment. The system comprises node 10 generating a charging data records (CDR) service, which is configured to generate and send charging data records, and comprises a charging data record sender functionality 12. The CDR generation node 10 is connected to one or more network elements 40 and monitors network traffic for CDR generation purposes. It is to be noted that the CDR generation node may be (implemented as part of) a network element providing communications services is a communications system. Another node 20 is arranged to receive and parse CDRs and comprises a CDR receiving unit 22 for receiving CDRs from the CDR sender 12. The CDR-receiving node 20 further provides parsed and possibly processed charging information for a billing system 30.

In one embodiment the charging data collection system is implemented in or connected to a mobile communications system for generating CDRs for mobile subscribers visiting a mobile network. The mobile network can be any network providing wireless services, for instance a network supporting GSM services, a network supporting GPRS (General Packet Radio Service) services, a third-generation mobile network, such as a network according to the network specifications of 3GPP (Third Generation Partnership Project), a non-cellular network, such as a wireless local area network WLAN or WiMAX, a private network, or a combination of several networks. The lower-layer transport techniques can be circuit- or packet-switched in accordance with the properties of the underlying mobile network. There may also be other networks, such as Internet Protocol (IP) based network(s), between the mobile network and the charging system. In addition to the illustrated configuration example, many other charging system configurations can also be envisaged.

Figure 1 is a simplified system architecture only showing some elements and functional entities, all being logical units whose implementation may differ from what is shown. It is apparent to a person skilled in the art that the systems also comprise other functions and structures. As already indicated, the underlying functions, structures, elements and the protocols used for communicating charging related information inside and to/from the charging system may be arranged in many ways. Therefore, they need not to be discussed in more detail here.

Apparatuses, such as servers, or corresponding server components, and/or other corresponding devices or apparatuses implementing the functionality of a corresponding apparatus described with an embodiment comprise not only prior art means, but also means for applying specific fragmentation information elements, some further embodiments of which are described in more detail below. More precisely, they comprise means for implementing functionality of a corresponding apparatus described with an embodiment and they may comprise separate means for each separate function, or means may be configured to perform two or more functions.

Figure 2 is a block diagram of an apparatus 200 according to an embodiment. The apparatus 200 may be the service node 10 or the CDR-receiving node 20 of Figure 1, for instance. Although the apparatus 200 has been depicted as one entity, different modules and memory may be implemented in one or more physical or logical entities. The apparatus 200 is adapted to control CDR fragment generation and/or CDR fragment parsing. For this purpose, the apparatus comprises a data storage 202 for storing charging related information at least temporarily, at least one control unit 204 for providing a control system controlling device management, a network interface 206 for sending and receiving different inputs, information and messages. The control unit 204 is adapted to control device management and to be responsive to received device management requests and location information.

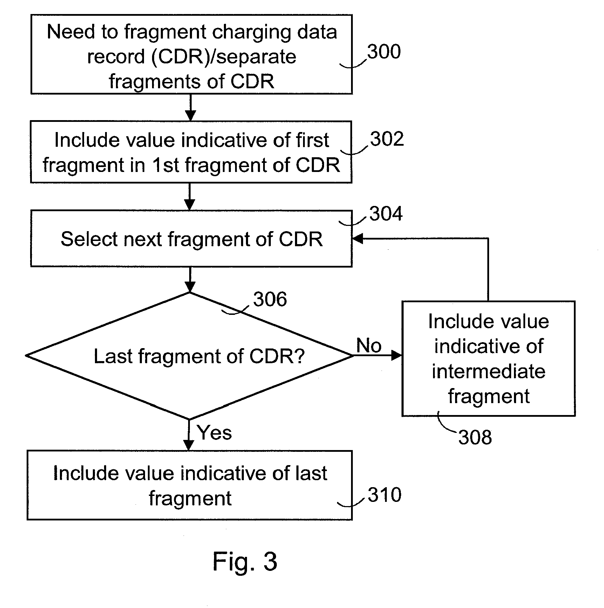

The functionality of the control unit 204 is described in more detail below on connection with Figures 3 to 6. It should be appreciated that the apparatus may comprise other units for charging or other services. However, they are not relevant to the actual invention and, therefore, they need not to be discussed in more detail here.

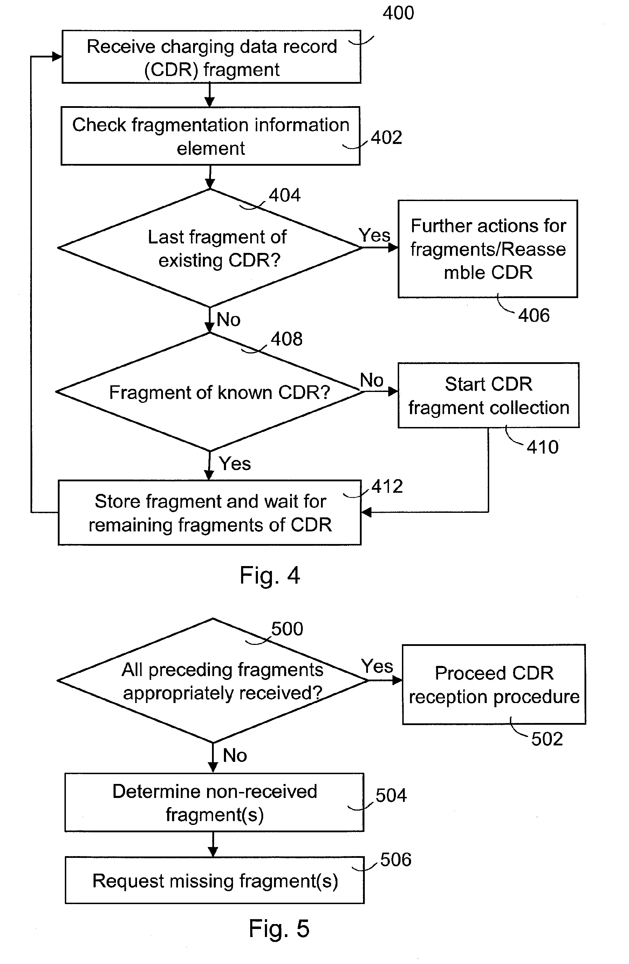

Present apparatuses comprise processors and memory that can be utilized in an embodiment. Computer program codes executed in the processing unit may be used for causing the apparatus 10, 20, 200 to implement a control system and means for providing the above-illustrated entities, some embodiments of the inventive functions also being illustrated below in association with Figures 3, 4, 5, and 6. For example, the control unit 204 may be adapted to provide the control system, by executing computer program code in a processor, as a software application controlling the CDR fragment identification related functions illustrated in connection with Figure 3 or CDR fragment parsing related functions illustrated in connection with Figures 4 and 5.

Such programs, also called program products, including software routines, applets and macros, can be stored in any apparatus-readable data storage medium and they include program instructions to perform particular tasks. All modifications and configurations required for implementing functionality of an embodiment may be performed as routines, which may be implemented as added or updated software routines. Further, software routines may be downloaded into an apparatus. The programs can also be loaded through a network by using a TCP/IP protocol stack, for instance. The apparatus, such as a server, or a corresponding server component, may be configured by a computer or a microprocessor, such as single-chip computer element, including at least a memory for providing storage area used for arithmetic operation and an operation processor for executing the arithmetic operation. An example of the operation processor includes a central processing unit. The memory may be removable memory detachably connected to the apparatus 200.

Hardware solutions or a combination of hardware and software solutions may also be used to implement the inventive functions. For instance, application circuits (ASIC) and/or programmable circuits may be applied. A chip unit or some other kind of hardware unit or module for controlling a communications apparatus may, in one embodiment, provide the control system for the apparatus 200 to perform these functions.

To transmit long CDRs, an information field may be used in a CDR message to indicate that the CDR continues. The problem of using such field is that, if the CDR-receiving node 20, such as a 3GPP charging gateway function (CGF), fails and the last fragment is delivered to another CDR-receiving node, the other CDR-receiving node cannot know that the delivered CDR is actually a fragment unless it gets also the previous CDR.

In one embodiment a specific fragmentation information element is applied for fragmented charging data records (CDRs). A fragmentation information element is inserted in each charging data fragment to indicate fragmentation, whereby a fragmentation information element of a last charging data fragment comprising the last portion of a charging data record comprises a predefined value differing from values of fragmentation information elements of other charging data fragments of the charging data record.

The term "charging data record" is to be understood broadly to refer to any kind of data collection comprising charging related information, and may also be referred to as a charging data unit. Further, the term "charging data fragment" is to be understood broadly to refer to any kind of message or packet comprising a portion of charging data record. Also insertion of a fragmentation information element to a charging data fragment refers generally to any kind of indication of fragmentation in a packet comprising charging data record information. The fragmentation information element may be located inside or outside a data field comprising charging data record information. For instance, the fragmentation information element may be specified as a specific field, in one embodiment in a header field portion, concatenated to a data field comprising charging data, whereby the "charging data fragment" comprises the charging data and the header field portion.

It is now possible to identify last parts of CDRs and detect end of a CDR. Hence, problems related to an error before reception of a last fragment can be avoided or at least reduced: For instance, if a 3GPP CGF receiving CDRs fails and the last fragment of a CDR is delivered to another CGF, the other CGF detects that the received CDR is a fragment and may request remaining fragments, or indicate fragmentation to a billing function, which may be arranged to finally reassemble the CDR.

Let us now study some embodiments for CDR fragment identification in more detail. Figure 3 illustrates a method according to an embodiment, the method being implemented by CDR-generating entity, such as the CDR sender 12 of service node 10 in Figure 1. In step 300 the method starts in response to a need to fragment a CDR. This step may be entered after collecting charging data on the basis of request or use of a communications service, generation of at least part of the CDR. In step 300 a set of fragments is separated to transmit the CDR, or each fragment is generated one at a time in the following steps.

First, the method starts with the first portion of the CDR, and in step 302 a predefined value, selected to indicate that the fragment in question is the first fragment of the set of fragments belonging to the single CDR, is included in the first fragment of the CDR being processed. The first fragment may be sent after step 302, or alternatively the set of fragments is sent later.

In step 304, the procedure selects a next fragment of the CDR or a next portion of the CDR succeeding the first fragment to generate the next fragment. In step 306 the procedure checks if the currently processed fragment selected in step 304 is the last fragment of the CDR, i.e. includes the last portion of the charging data in the CDR. If not, a value indicating an intermediate fragment is added in step 308 in the fragmentation information element of the fragment. Then the procedure returns to step 304 to process the next fragment of the CDR. If it is detected in step 306 that the fragment is the last one, in step 310 a value pre-determined to indicate last fragment is included in the fragmentation information element of the fragment being processed. Since after step 310 the whole CDR has been processed, the fragmentation information element specification procedure of Figure 3 may end.

Figure 4 illustrates a method according to an embodiment. The method represents a procedure for processing fragmentation information elements of received charging data record fragments. In step 400 a CDR fragment is received. In step 402 a fragmentation information element of the fragment is checked. The procedure may also be configured to check further CDR information, such as a CDR identifier. In step 404 it is checked if the fragment is the last one from the fragmented CDR. This can be checked using the fragmentation information element. In one embodiment a record sequence number of the fragment is checked together with the information from the rest of the stored fragments for that CDR.

If the fragment is the last one from the fragmented CDR, in step 406 further actions are performed for the fragment (and earlier stored fragments belonging to the same CDR), which is not part of the present fragmentation information element processing procedure of Figure 4. The CDR may thus be reassembled, i.e. all fragments are retrieved and a single CDR is formed of the charging data in the fragments. The CDR may be forwarded to the billing system or further processed in the apparatus implementing the method of Figure 4.

If the check 404 reveals that the fragment is not the last one of the CDR, in step 408 the procedure checks if the fragment belongs to an already known CDR, i.e. there is a need to start CDR fragment collection procedure for the CDR identified in the fragment. In one embodiment this may be detected if the fragment includes a value pre-specified to indicate first fragments. The procedure may in step 408 check earlier stored CDR data to detect if any information has been stored for a CDR identifier included in the received fragment.

If the fragment belongs to an already known CDR, in step 410 a CDR fragment collection is started. This means that the apparatus receiving the fragments starts a procedure to gather all fragments belonging to the CDR identified in the received first fragment of the CDR. Thus, an entry may be entered in a list of fragmented CDRs on the basis of the CDR identification information in the received fragment. Further, the received fragment is stored and the procedure waits for remaining fragments of the CDR in step 412.

If the fragment belongs to a CDR for which fragment(s) have already been received, for instance the fragment does not include the value of first fragment in step 408, the procedure enters step 412, stores the fragment and waits for remaining fragments of the CDR. Then, the procedure may return to step 400 in response to receiving a next fragment.

It is to be noted that the above embodiments are only illustrative examples of one possible implementation option, and various modifications and additions may be made to the procedures. For instance, Figure 4 does not illustrate the maintenance of CDR fragmentation information, such as a fragment information table including entries for each CDR for which all fragments have not been yet received. The order of checking steps may be varied. For instance, checking step 408 may be performed before current checking step 404.

Figures 3 and 4 illustrate an embodiment where at least first and last fragments of a given CDR have specific, pre-assigned values, so that the first and last fragments can be separated from other fragments of a given CDR. However, in another embodiment a specific or unique value is pre-assigned only for last fragments of CDRs. In another embodiment also each intermediate fragment has a specific value for differentiating the intermediate fragment from other fragments. In an alternative embodiment there is a specific value for all intermediate fragments, or intermediate fragments are only marked as fragments. Some further fragment identification examples are illustrated in connection with Figure 6.

Figure 5 illustrates an embodiment for fragment error detection and recovery. In step 500 it is checked if all preceding fragments have been appropriately received. This step is performed on the basis of the received and stored fragmentation information, which is in one embodiment stored as fragmentation information table. If yes, in step 502 the error detection procedure of Figure 5 may and a next step of the currently executed CDR fragment reception and/or processing procedure may proceed.

If answer to step 500 is no, in step 504 it is determined which fragment(s) has (have) not been received.

In step 506 the missing fragment(s) may be requested. In one embodiment these fragments are requested from a back-up server. After reception of the requested fragments, the CDR reception procedure may continue (not shown).

When the procedure of Figure 5 is implemented for an embodiment where each intermediate fragment has a specific value, it is possible to detect any missing (intermediate) fragment, and request just this fragment before starting reassembly of the CDR. This embodiment is specifically useful in systems where the underlying transport mechanism is unreliable and reception order of the fragments is not guaranteed.

The steps illustrated in Figure 5 may be applied at one or more occasions. In one embodiment the error detection step (500) is performed in response to detection of a received fragment, for instance during or after step 402 of Figure 4. The steps may be carried out in one or more entities. For instance, a billing system may perform at least some of the error checking related features and request missing fragment(s) from CDR-receiving entities, such as the 3GPP CGFs. A CDR-receiving entity, which has received some fragments of a CDR, may inform the billing system that not all fragments were received, and even identify the missing fragment(s).

In one embodiment error detection step is performed specifically after detecting a fragment of a new CDR, for instance during/after step 406. In one embodiment it is checked if the fragment detected on the basis of previously stored fragmentation information as belonging to a new CDR has a value assigned for first fragments in the fragmentation information element of the received fragment. If not, the first fragment of the CDR is detected as being missing, and in step 506 (at least) the first fragment is requested.

In a still another embodiment the error detection procedure is performed to detect if any intermediate fragments are missing. In one embodiment the error detection step is entered after detecting the value assigned for last fragments, i.e. before or in the beginning of step 408. However, it is to be noted that the error detection may be performed at another phase of the CDR reception procedure.

In order to arrange error detection for last fragment, in one embodiment the procedure of Figure 4 is arranged to start error detection after a predetermined wait period in step 410 has passed. Thus, the procedure checks if intermediate fragment(s) and/or last fragment is/are missing, and requests missing fragment(s).

The error detection procedure may utilize further CDR information to detect errors. In one embodiment CDR fragments include one or more fields for sequence number information, which is used to detect errors in addition to organize CDRs. For instance, record sequence number information of 3GPP CDRs may be utilized.

Figure 6 illustrates a CDR fragment 60 according to an embodiment. The fragment comprises a CDR identifier 62 and a fragmentation information element 64 for storing fragment identification information.

In one embodiment charging data fragments between the first charging data fragment and the last data fragment are sequentially numbered. In a further embodiment the values for the fragmentation information element 64 are specified as follows:

$$1, 2, 3, 4, 5, \ldots n\text{-}1, 0$$

where "1" is assigned for the first fragment of a given CDR, n represent the number of fragments in the CDR, and "0" is the value assigned for last fragment. In this embodiment each fragment has a specific fragmentation value. Thus it is also possible to determine which intermediate fragment is missing with the help of the record sequence number.

In one embodiment the fragmentation information element is specified in a *cdrContinues* field in such a way that the first and last CDR fragments can be detected. Similarly as already illustrated, the definition for the *cdrContinues* field is the following:

- If the CDR requires no fragmentation, the field is not included in the CDR.
- If the CDR requires fragmentation, then

    o For the last fragment, the value of *cdrContinues* is zero.
    o For other fragments than the last fragment, the value of *cdrContinues* defines the ordinal number of the fragment. The first fragment has value one, the next one has value two, and so on.

An exemplary ASN.1 definition is illustrated below for *cdrContinues*:

```
...
cdrContinues CDRContinues OPTIONAL,
-- definition inside CDR
...
CDRContinues ::= INTEGER (0..255)
-- First fragment has value 1
-- Last fragment has value 0
```

It is evident that the above embodiments are only examples of some available fragment identification methods, and the invention is not limited to these methods. For instance, other than integers may be used for numbering the fragments, non-number based identification may be applied as the value of the fragmentation information element, or some further coding method may be applied for coding the fragment identification value in the fragmentation information element 64. A further example is that decreasing numbering (5, 4, 3, 2 etc.) is used. A still another embodiment is that an additional information element is used to indicate number of fragments, or specifically the last fragment of a CDR, but this embodiment introduces an additional field.

In one embodiment at least some of the above-illustrated CDR fragmentation features are applied in CDRs generated for charging 3GPP (Third Generation Partnership Project) mobile communications services.

A reference is also made to the 3GPP specification 3GPP 32.295, *Charging Data Record (CDR) transfer,* version 6.1.0, in particular Chapters 5 and 6, for more details on how Ga interface is used for CDR transfer. This 3GPP specification 32.095 defines the GTP' protocol for CDR transfer. The GTP' header includes the *Length* field, which defines the length of the GTP' message. The length of that *Length* field is two octets, which means that the maximum length for a message is $2^{16}$ (65536) bytes. The GTP' protocol can be used over UDP or TCP, and both of these protocols use also two octets for defining the maximum length of the TCP or UDP datagram.

The service node (10 in Figure 1) generating the CDRs including the specific fragmentation information elements may be an SGSN (Serving GPRS Support Node) or a GGSN (Gateway GPRS Support Node). In one embodiment a charging sub-system of a network element device implementing GGSN functions is arranged to implement at least some of the above-illustrated features for generating specifically identified CDR fragments, a reference is also made to Figure 3 and related description.

CDR fragments comprising a fragmentation information unit according to one or more above-illustrated embodiments are transferred between a charging function in a 3GPP support node and a Charging Gateway Function (CGF) over the Ga interface. With reference to Figure 1, the CDR sender 12 may thus be the charging function or charging data function (CDF) in GGSN or SGSN. The CGF, which may be an independent entity (such as the node 20 illustrated in Figure 1), part of a device implementing the support node functionality, or part of the billing system, can be arranged to receive 3GPP CDR fragments comprising a fragmentation information unit according to one or more above-illustrated embodiments. The fragmentation information unit and use thereof over the Ga interface may be specified in relevant 3GPP charging specification(s), such as the 3GPP 32.251, 32.295, and 32.298. For instance, the fragmentation information unit may be included in a data record packet information element illustrated in Chapter 6.2.4.5.3 of 3GPP 32.295 (ver. 6.1.0).

It will be obvious to a person skilled in the art that, as technology advances, the inventive concept can be implemented in various ways. The invention and its embodiments are not limited to the examples described above but may vary within the scope of the claims.

### Claims

1. A method for transmitting charging data, comprising:

   fragmenting (300) a charging data record into a plurality of charging data fragments for transmission, each charging data fragment comprising a portion of the charging data record, **characterized by**
   inserting (302; 308; 310) to each charging data fragment a fragmentation information element (64) to indicate fragmentation, wherein a fragmentation information element of a last charging data fragment comprising the last portion of the charging data record comprises a predefined identifier differing from identifiers of fragmentation information elements of other charging data fragments of the charging data record.

2. A method according to claim 1, wherein a predefined first fragment identifier is specified (302) in a fragmentation information element of a first charging data fragment of the charging data record, the first charging data fragment comprising the first portion of the charging data record.

3. A method according to claim 1 or 2, wherein each one of the other charging data fragments comprises in its fragmentation information element a unique identifier differing from identifiers of other charging data fragments.

4. A method according to claim 3, wherein charging data fragments between the first charging data fragment and the last data fragment are sequentially numbered.

5. A method according to claim 3 or 4, wherein the fragmentation information element received (400) from a charging data record generating entity is checked (402) by a charging data record receiving entity storing fragmentation information on each received fragment on the basis of the fragmentation information elements of received fragments, an error detection step (500) is performed on the basis of the stored fragmentation information to determine if all fragments or all preceding fragments of the charging data record have been received, and
   in response to detecting one or more fragments missing from the charging data record, requesting (506) said one or more fragments.

6. An apparatus (200) comprising:

   a network interface (206); and
   a control system (204) for processing charging data units and configured to fragment (300) a charging data record into a plurality of charging data fragments for transmission, each charging data fragment comprising a portion of the charging data record, **characterized in that** the control system (204) is configured to insert (302;

308; 310) to each charging data fragment a fragmentation information element (64) to indicate fragmentation, wherein a fragmentation information element of a last charging data fragment comprising the last portion of the charging data record comprises a predefined identifier differing from identifiers of fragmentation information elements of other charging data fragments of the charging data record.

7. The apparatus of claim 6, wherein the control system (204) is further configured to specify (302) a predefined first fragment identifier in a fragmentation information element of a first charging data fragment of the charging data record, the first charging data fragment comprising the first portion of the charging data record.

8. The apparatus of claim 6 or 7, wherein the control system (204) is configured to include a unique identifier differing from identifiers of other charging data fragments in fragmentation information element of each of the other charging data fragments.

9. The apparatus of any one of claims 6 to 8, wherein the control system (204) is configured to sequentially number charging data fragments between the first charging data fragment and the last data fragment.

10. The apparatus of any one of claims 6 to 9, wherein the apparatus is a third generation partnership project 3GPP support node configured with 3GPP charging data function adapted to transmit the charging data fragments to a charging data gateway.

11. An apparatus comprising:

a network interface (206) for receiving (400) a plurality of charging data fragments of a charging data record; and a control system (204) configured to process received charging data fragments, each charging data fragment comprising a portion of the charging data record, **characterized in that** the control system (204) is configured to parse (402) each received charging data fragment to detect a fragmentation information element (64) indicating fragmentation, wherein the control system (204) is configured to detect (404) a last charging data fragment comprising the last portion of the charging data record on the basis of a fragmentation information element comprising a predefined identifier differing from identifiers of fragmentation information elements of other charging data fragments of the charging data record.

12. An apparatus according to claim 11, wherein the control system (204) is further configured to detect (406) a predefined first fragment identifier in a fragmentation information element of a first charging data fragment of the charging data record, the first charging data fragment comprising the first portion of the charging data record, and the control system is configured to start (408) fragment reception procedure for the charging data unit in response to detecting the first fragment identifier.

13. An apparatus according to claim 11 or 12, wherein the control system (204) is configured to detect and store a unique identifier differing from identifiers of other charging data fragments in fragmentation information element of each of the other charging data fragments, and the control system (204) is configured to wait for remaining fragment(s) of the charging data record in response to the fragmentation information element of a received charging data fragment not including the predefined identifier for last fragment.

14. An apparatus according to any one of claim 11 to 13, wherein the control system (204) is configured to reassemble (406) the charging data record on the basis of the received fragments and end the fragment collection procedure for the charging data record in response to detecting the predefined identifier for the last charging data fragment.

15. An apparatus according to any one of claim 11 to 14, wherein the apparatus is configured to store (412) fragmentation information for each received fragment on the basis of the fragmentation information elements of the received fragments, and the apparatus is configured to perform an error detection step (500) for a received fragment on the basis of the stored fragmentation information to determine if all fragments or all preceding fragments of the charging data record have been received.

16. An apparatus according to claim 15, wherein the apparatus is configured, in response to detecting one or more fragments missing from the charging data record, to request (506) said one or more fragments or to inform a further entity of missing fragment(s).

17. An apparatus according to any one of claim 11 to 16, wherein the apparatus is a network element adapted to function as a third generation partnership project 3GPP charging data gateway configured to receive the charging data fragments from a charging data function.

18. A communications system comprising an apparatus according to any one of claims 6-10 and an apparatus according to any one claims 11-17.

19. A computer program comprising program instructions for, when loaded into an apparatus and executed by a processor of the apparatus, constituting the control system of any preceding claim 6 to 10.

20. A computer program comprising program instructions for, when loaded into an apparatus and executed by a processor of the apparatus, constituting the control system of any preceding claim 11 to 17.

40 —— Network element —— CDR sender —— CDR receiver —— Billing system —— 30

10    12        20    22

## Fig. 1

200 ——

Memory —— 202

Network interface —— Control unit —— 204

206 ——

## Fig. 2

60 ——

62        64

## Fig. 6

Need to fragment charging data record (CDR)/separate fragments of CDR — 300

Include value indicative of first fragment in 1st fragment of CDR — 302

Select next fragment of CDR — 304

Last fragment of CDR? — 306

No → Include value indicative of intermediate fragment — 308

Yes → Include value indicative of last fragment — 310

Fig. 3

Fig. 4

Fig. 5

**European Patent Office**

**EUROPEAN SEARCH REPORT**

Application Number

EP 07 12 0861

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/035440 A1 (CASACCIA LORENZO [US] ET AL) 20 February 2003 (2003-02-20)<br>* abstract *<br>* paragraph [0007] - paragraph [0010] *<br>* paragraph [0060] - paragraph [0062] *<br>* paragraph [0068] *<br>* paragraph [0074] - paragraph [0086] *<br>----- | 1-20 | INV.<br>H04L12/14<br>H04M15/00 |
| A | KEVIN ZHANG ET AL: "Common Reliable Accounting for Network Element (CRANE) Protocol Specification Version 1.0; draft-kzhang-crane-protocol-02.txt;" IETF STANDARD-WORKING-DRAFT, INTERNET ENGINEERING TASK FORCE, IETF, CH, no. 2, January 2002 (2002-01), XP015031310 ISSN: 0000-0004<br>* abstract *<br>* paragraph [001.] *<br>* paragraph [002.] - paragraph [02.1] *<br>* paragraph [02.7] *<br>----- | 1-20 | |
| D,A | "Digital cellular telecommunications system (Phase 2+); Universal Mobile Telecommunications System (UMTS); Telecommunication management; Charging management; Charging Data Record (CDR) transfer (3GPP TS 32.295 version 7.0.0 Release 7); ETSI TS 132 295" ETSI STANDARDS, EUROPEAN TELECOMMUNICATIONS STANDARDS INSTITUTE, SOPHIA-ANTIPO, FR, vol. 3-SA5, no. V700, June 2007 (2007-06), XP014038292 ISSN: 0000-0001<br>* paragraph [5.1.1] - paragraph [5.1.2] *<br>* paragraph [05.2] *<br>----- | 1-20 | TECHNICAL FIELDS SEARCHED (IPC)<br><br>H04L |

The present search report has been drawn up for all claims

| Place of search | Date of completion of the search | Examiner |
|---|---|---|
| The Hague | 17 April 2008 | Lievens, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 12 0861

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2008

| Patent document cited in search report | Publication date | Patent family member(s) | | Publication date |
|---|---|---|---|---|
| US 2003035440 A1 | 20-02-2003 | AU | 2002323185 A1 | 03-03-2003 |
| | | CN | 1568603 A | 19-01-2005 |
| | | EP | 1417846 A2 | 12-05-2004 |
| | | JP | 2005500761 T | 06-01-2005 |
| | | TW | 256789 B | 11-06-2006 |
| | | WO | 03017691 A2 | 27-02-2003 |

EPO FORM P0459

For more details about this annex : see Official Journal of the European Patent Office, No. 12/82